# EUROPEAN PATENT SPECIFICATION

(11) **EP 1 625 994 B1**
(45) Date of publication and mention of the grant of the patent: **20.12.2006**
(21) Application number: 05076844.9
(22) Date of filing: 09.08.2005
(51) Int. Cl.: B62H 5/14

(54) **Ring lock for a bicycle**
Ringschloss für ein Fahrrad
Etrier antivol pour bicyclette

(30) Priority: 09.08.2004 NL 1026805
(43) Date of publication of application: 15.02.2006
(73) Proprietor: STENMAN HOLLAND B.V., 3903 AV Veenendaal (NL)
(72) Inventor: De Roos, Henk, 3901 WH Veenendaal (NL)
(74) Representative: Winckels, Johannes Hubertus F.

(56) References cited:
- EP-A- 1 416 110
- GB-A- 2 258 264
- NL-A- 8 300 938

## Description

The invention relates to a ring lock for a bicycle, provided with a housing with two curved legs which surround a lock guiding space, wherein free ends of the legs face a locking space, the lock being provided with an operable locking bolt which is slideable from the guiding space into the locking space, while the lock housing comprises a first and a second housing part, which housing parts are connected to each other, the first housing part being provided with two reinforced end parts which are located at the free ends, wherein the housing comprises an arcuate slot.

Such a lock is known from NL 8300938, laid open to public inspection. As a rule, the housing of such a lock is attached to a frame of a bicycle to be locked such that the legs of the lock extend on both sides of a wheel of the bicycle. Then, the locking bolt can be slid from a releasing position, where the bolt is located in the guiding space of the legs of the lock, to a locking position. In this locking position, the locking space is bridged by the locking bolt, for blocking rotation of the bicycle wheel.

According to NL 83000938, the lock is provided with a protective bracket formed from a hard material to protect the lock from being forced. The lock may further be provided, on both sides of the locking space, with covers enclosing the locking bolt.

A drawback of the known lock is that there is a risk that the lock is opened by a bicycle thief by forcing the lock via an arcuate slot, for instance while using a screwdriver or a pair of pincers.

The present invention contemplates an improvement of the ring lock of the preamble. In particular, the invention contemplates a ring lock which is relatively difficult to force.

According to the present invention, the lock is characterized to that end in that the first housing part is provided with at least one weakening line, which weakening line extends at least partly between and/or adjacent an end part and a remaining part of the first housing part.

Through the use of one or more of such weakening lines, the nearer end part of the first housing part is relatively independent of mechanical influences which are exerted on a remaining part of the first housing part. If, for instance, breaking or peeling forces are applied to the first housing part, via the arcuate slot, the first housing part may tear along and/or from this weakening line such that the end part hardly changes position, if at all. In that case, a part of the first housing part may indeed be torn open, however, the end parts of the first housing part can remain in position to retain the locking bolt for the purpose of blocking a bicycle wheel.

The end parts can each be of, for instance, tubular design and substantially surround the locking bolt guiding space at least at the free ends of the legs. These end parts can retain the bolt relatively firmly, for instance in combination with a middle part of the lock housing, to prevent at least undesired axial movement of the bolt when the bolt is in the locking position.

An embodiment is characterised by the features of claim 14. Here, the operating means extends for instance substantially in axial direction, which direction is parallel to the virtual rotation axis, via the slot, through the lock housing.

In this manner, the lock is relatively difficult to force. Firstly, the arcuate slot as such is relatively difficult to break open, in that the slot is not provided in an outside contour of the lock housing but in the front side or rear side of the lock housing. In this manner, opposite parts of the lock housing between which the slot extends are also curved, at least seen in front view. Such curved housing parts are relatively hard to move apart with respect to the straight housing parts that bound the slot of the known lock, which known slot is located in an outside contour of the lock.

It is furthermore relatively hard to break the lock open in that the arcuate slot is arranged in a front side or rear side of the lock housing and not in an outside contour extending between the front side and rear side. This holds in particular when the lock is provided with two housing parts connected to each other and extending opposite each other, which bound the guiding space, while one of the housing parts is provided with the lock front side and the other housing part with the lock rear side. In the latter case, it is particularly difficult to move the two housing parts apart via the arcuate slot by driving a screw driver, a pair of pincers or other object into the slot in order to apply breaking or peeling forces on the lock.

It is noted that GB 2 258 264 merely shows a ring lock whose housing is provided with one relatively long curved leg, i.e. the 'hollow ring main case body', and with one side part with a locking mechanism. With this lock, the side part is provided with a curved slot, allowing passage of a part of the bolt operating button. When this lock is mounted on a bicycle frame, it occupies relatively much space. Additionally, this lock cannot be mounted sufficiently firmly on a bicycle frame, for instance under a saddle. Further, this lock is relatively poorly force-proof.

Preferably, the first housing part is provided with the arcuate slot. Further, according to the invention, it is particularly advantageous when the first housing part is also provided with at least one weakening line, for instance an incision, perforation, tear line and/or cut, which weakening line extends at least partly between and/or adjacent an end part and a remaining part of the first housing part.

The two curved parts have, for instance, approximately the same length and can extend from opposites sides from a middle part of the lock housing. In that case, the lock can be mounted on a bicycle frame relatively firmly, while it can be avoided that a user, when cycling, is hindered by specific parts.

In addition, the invention provides a bicycle according to the features of claim 17, which bicycle can be protected well against theft by means of the lock.

Further elaborations of the invention are described in the subclaims. Presently, the invention will be clarified with reference to an exemplary embodiment and the drawing. In the drawing:
Fig. 1 shows a perspective front view of an exemplary embodiment of the invention;
Fig. 2 shows a similar view as Fig. 1, at a different angle;
Fig. 3 shows a perspective front view of the exemplary embodiment in a partly taken-apart condition;
Fig. 4 shows a detail Q of Fig. 3;
Fig. 5 shows a perspective front view of the second housing part, provided with the locking bolt, of the exemplary embodiment;
Fig. 6 shows a perspective front view of the first housing part; and
Fig. 7 shows a rear view of the first housing part of the exemplary embodiment.

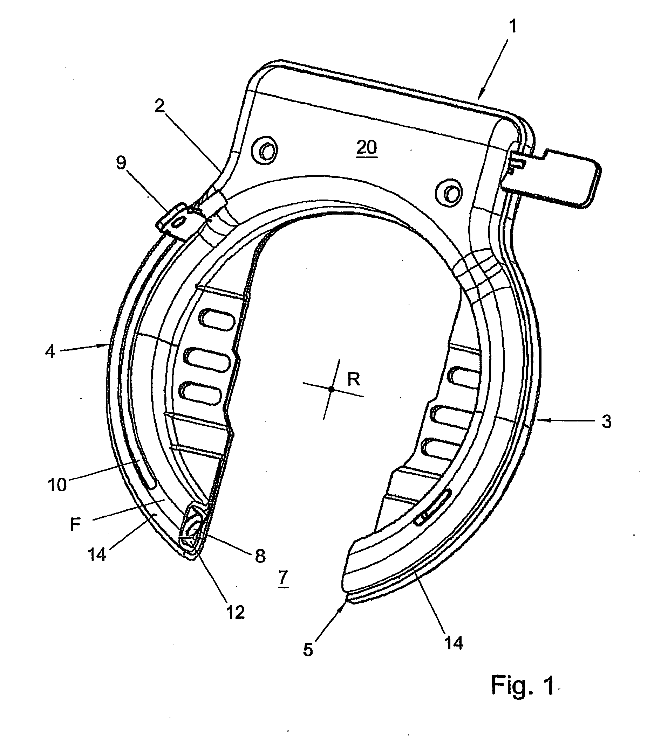

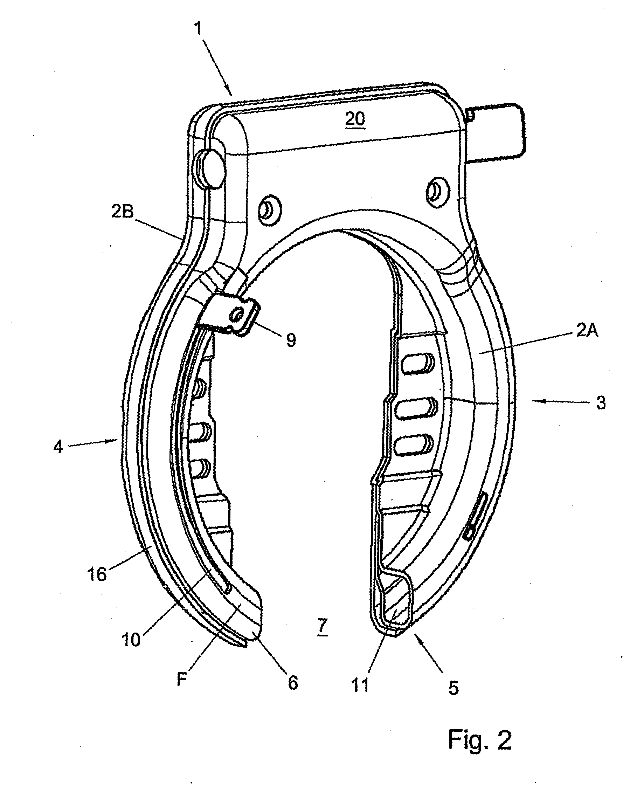

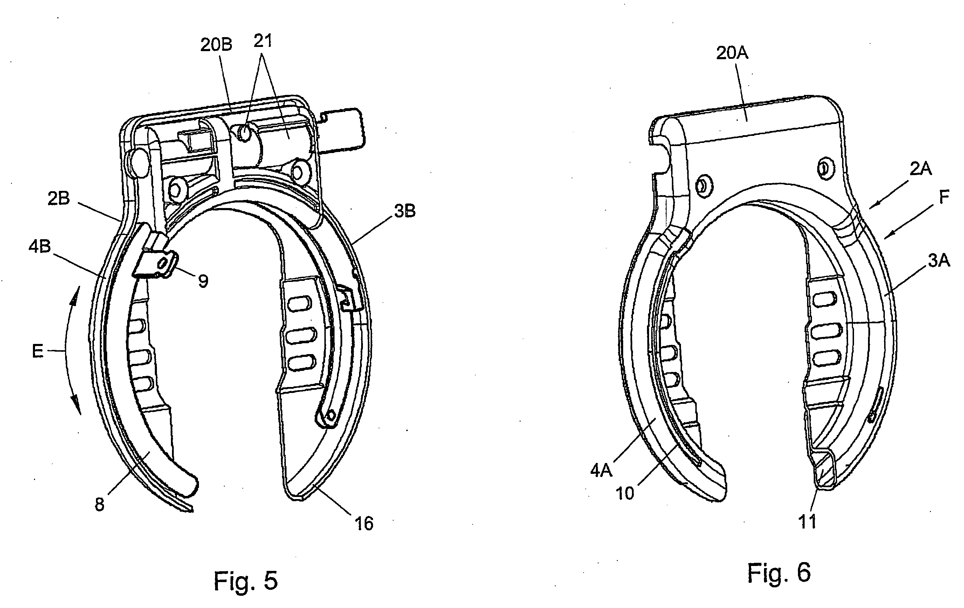

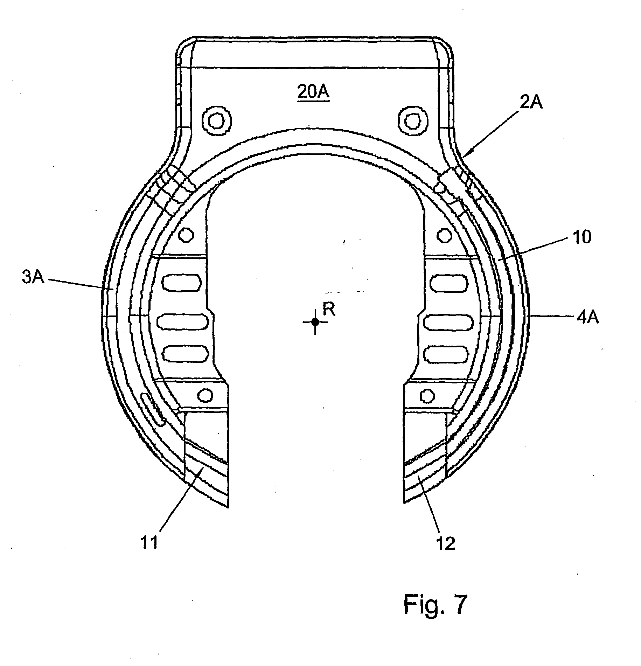

Figs. 1 - 7 show an exemplary embodiment of the invention, comprising a ring lock for a bicycle, arranged to block a wheel of the bicycle. The bicycle, or a bicycle wheel to be blocked by the lock, has not been represented in the drawings. The lock 1 is provided with a housing 2 with two curved legs 3, 4 which surround a lock guiding space 13. Free ends 5, 6 of the legs 3, 4 face a locking space 7. The lock 1 is further provided with an operable locking bolt 8 which, through a rotation about a virtual rotation axis R, can be slid, at least partly, from the guiding space 13 into the locking space 7, and vice versa. A direction of rotation of the bolt 8 is shown in Fig. 5 with arrow E. In Fig. 7, the virtual rotation axis R extends at right angles to the plane of the drawing.

The lock housing 2 comprises a first housing part 2A and a second housing part 2B which housing parts 2A, 2B are attached onto each other. The second housing part 2B is furthermore provided with a bent outside edge 16 which extends somewhat along an outside of the first housing part 2A.

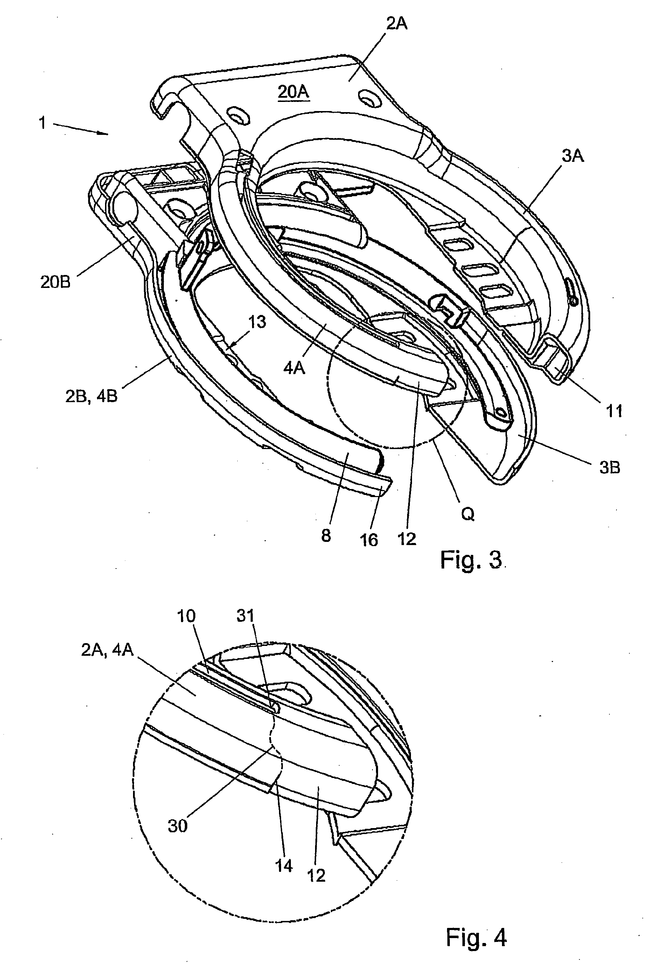

As shown in Figs. 3, 5 and 6, the two housing parts 2A, 2B are each provided with two leg parts 3A, 3B, 4A, 4B, extending from a middle part 20A, 20B of the housing 2, for the purpose of forming the legs 3, 4. The middle parts 20A, 20B of the housing parts 2A, 3B form an upper housing part 20, in which locking means 21 known per se are provided to lock the bolt 8 in the locking position. Described so far, the lock 1 is similar to the bicycle ring lock known from practice.

As shown in the Figures, the locking bolt 8 is connected to an operating means 9 which extends through an arcuate slot 10 of the lock housing 2. In the present exemplary embodiment, the arcuate slot 10 extends in a front side or rear side of the lock 1, which front side F or rear side, respectively, extends substantially at right angles relative to the virtual rotation axis R.

In the exemplary embodiment represented in the Figures, reference numeral F indicates the front side of the lock housing. In the exemplary embodiment, the arcuate slot 10 is provided in this front side F. As is clearly visible, the slot 10 is not located in the outside contour of the lock housing extending between the front side F and the lock rear side. This outside contour comprises the part of the outside of the lock which extends substantially concentrically relatively to the virtual rotation axis R. In particular, the arcuate slot 10 reaches only through the first housing part 2A, in particular through the arm 4A of this housing part 2A, which arm 2A, in Figs. 1 - 6, extends on a left side of the middle part 20A.

In the exemplary embodiment, furthermore, the operating means 9 extends substantially in axial direction through the slot 10. This axial direction is substantially parallel to the virtual rotation axis R.

The operating means 9 can further be provided, on a side remote from the locking belt 8, with for instance an operating button or the like (not shown). As the operating means 9 extends in the axial direction, an operating button provided on this operating means can project outside the lock over only a relatively short distance. It will be clear that the operating means 9 as such can be designed in different manners. In the present exemplary embodiment, the operating means 9 comprises a relatively simple flange which is integrally connected to the locking bolt 8.

Owing to the design and, more specifically, the location of the annular slot 10, this slot is relatively difficult to force. Parts of the first housing part 2A that surround this slot 10 are, first of all, relatively difficult to deform, in particular when radial forces are applied to these parts, viewed in relation to the virtual rotation axis R. Such radial forces may for instance be applied to the slot 10 by means of a breaking element, such as a screwdriver, which is inserted at a right angle into this slot. It is, in addition thereto, relatively hard, if not impossible, to reach the second housing part 2B via this slot 10 as the locking bolt 8 forms a screen between the slot 10 and the second housing part 2B. Consequently, the risk of the second housing part 2B and the first housing parts 2A being prized apart through a breaking element being forced into this slot 10 is relatively small. Furthermore, the lock can be coupled to the bicycle frame relatively firmly, while after mounting, the cyclist experiences relatively little hinder from the lock.

As further shown in Figs. 1, 2, 3, 6 and 7, the first housing part 2A is provided on both sides of the locking space 7 with reinforced end parts 11, 12, which end parts 11, 12 each substantially surround the locking bolt guiding space at the free ends 5, 6. In particular, each free end part 11, 12 surrounds the guiding space 13 along the inside contour and outside contour thereof, as well as at the front side and the rear side of the lock housing. Each end part 11, 12 therefore comprises a tube, provided with projecting lips, which tube surrounds the guiding space 13. The second housing part 2B extends substantially behind each of these end parts 11, 12 of the first housing part 2A.

The end parts 11, 12 of the first housing part 2A can retain the locking bolt 8 extra firmly when the bolt 8 is brought to a locking position (not shown). The two end parts 11, 12 of the first housing part 2A and the middle part 20 of the lock housing provide for three separate "points" where, with the lock in the closed position, the locking bolt 8 is retained, in order that undesired removal of the locking bolt 8 can be effectively prevented.

The extent to which the lock 1 is burglary proof can be increased according to the invention in that the first housing part 2A is provided with one or more weakening lines 14, in the exemplary embodiment two, for instance recesses, perforations, tear lines and/or cuts, which weakening lines extend partly between the end parts 11, 12 and a remaining part of the first housing part 2A. In particular, each weakening line 14 extends at least within - at least opposite - the outside edge 16 of the second housing part 2B in the first housing part 2A. Each weakening line 14 further extends substantially transversely relative to the lock guiding space 13. As shown in more detail in Fig. 4, the weakening line 14 further extends substantially at right angles to an edge of the first housing part 2A, in the outside contour of this housing part 2A. The weakening lines 14 of the exemplary embodiment extend substantially parallel to the circumferential direction of a neighbouring end part 11, at least the circumferential direction relative to the central axis of the lock guiding space 13. The one weakening line 14, which is provided in the leg part 4A comprising the arcuate slot 10, extends from this edge, over a particular distance in the direction of an end 31 of the arcuate slot 10 (see Fig. 4) such that this weakening line 14 and the end 31 of the slot 10 extend in, or substantially adjacent the same cross surface of the lock guiding space 13.

When an attempt at forcing the lock housing 2 is carried out through the application of a force to the operating means slot 10 adjacent a free end of one of the legs 3, 4, the nearer weakening line can break, tear open and the like so that the adjoining end part 11, 12 of the leg 3A, 4A is hardly touched, if at all, by this attempt to forcing. The same holds for an attempt to forcing wherein peeling forces are applied between sides of the first and second housing part 2A, 2B extending side by side.

In particular, the weakening lines 14 are designed and localized in the lock housing 2 such that a very forceful attempt at forcing, applied via the slot 10 or between edges of the housing part 2A, 2B, only leads to a portion of the first housing part 2A being torn open and bent away, without the nearer end part 11, 12 of that housing part 2a being carried along. A possible tear line, formed upon tearing of the first housing part 2A, is indicated in Fig. 4 in an interrupted line 30. Here, a tear is formed via the one weakening line as far as and including the nearby end 31 of the arcuate slot 10. In this manner, viewed from a point of view of locking, the attempt at forcing has only led to a relatively insignificant part of the lock housing 2 being broken away. Hence, the tubular end parts 11, 12 of the first housing part 2A remain in a position so as to retain the locking bolt 8 so that the locking bolt continues to be in the locking position for blocking a bicycle wheel. That is why a bicycle which is blocked with the present lock 1 is relatively well protected against theft.

It is evident to the person skilled in the art that the invention is not limited to the exemplary embodiment described. Various modifications are possible within the framework of the invention as set forth in the following claims.

For instance, the operating means can project in, for instance, substantially axial direction from the arcuate slot, and/or in a different direction. An operating button located outside the lock housing 2 can be situated, for instance, at a front side or rear side of the lock, or along an outside contour of the lock. This depends, for instance, on the shape and design of the part 9 of the operating means projecting from the arcuate slot 10.

The annular slot mentioned may comprise an annular recess, annular groove or the like.

The lock may be provided with one or more weakening lines 14 to provide for an end part 11 of the first housing part 2A to remain substantially in position when the lock is forced.

Each weakening line 14 can further be designed in various manners and extend in different directions.

In addition, each tubular end part 11, 12 can be located for instance at least at, or adjacent a respective end 5, 6 of the legs 3, 4 of the lock housing 1.

Furthermore, the housing parts 2A, 2B can be connected to each other in various manners, which will be obvious to the person skilled in the art.

## Claims

1. A ring lock for a bicycle, provided with a housing (2) with two curved legs (3, 4) which surround a lock guiding space (13), wherein free ends (5, 6) of the legs (3, 4) face a locking space (7), the lock (1) being provided with an operable locking bolt (9) which is slideable from said guiding space (13) into said locking space (7), while said lock housing comprises a first (2A) and a second housing part (2B), which housing parts (2A, 2B) are connected to each other, the first housing part (2A) being provided with two reinforced end parts (11) which are located at said free ends (5, 6), wherein the housing (2) comprises an arcuate slot (10), **characterized in that** the first housing part (2A) is provided with at least one weakening line (14), which weakening line (14) extends at least partly between and/or adjacent a said end part (11) and a remaining part of the first housing part (2A).

2. A ring lock according to claim 1, wherein said weakening line (14) extends at least opposite an outside edge (16) of the second housing part, which outside edge (16) is, in particular, a bent edge of the second housing part (2B) and which outside edge (16) extends in particular along an outside of the first housing part (2A).

3. A ring lock according to claim 1 or 2, wherein said weakening line (14) extends substantially at right angles to an edge of the first housing part (2A).

4. A ring lock according to any one of the preceding claims, wherein the first housing part (2A) is provided with the arcuate slot (10) to lead a locking bolt operating means outside, while at least one said weakening line extends substantially over a particular distance in the direction of an end of said arcuate slot (10).

5. A ring lock according to any one of the preceding claims, wherein at least one said weakening line extends substantially parallel to a circumferential direction of a said end part (11).

6. A ring lock according to any one of the preceding claims, wherein each said weakening line is substantially parallel to a virtual rotation axis (R), about which rotation axis (R) said locking bolt is rotatable during use.

7. A ring lock according to any one of the preceding claims, wherein the locking bolt (8) is connected to an operating means (9) which projects through the arcuate slot (10) of the lock housing (2), while each said weakening line (14) extends at a distance from said arcuate slot (10).

8. A ring lock according to any one of the preceding claims, wherein the said weakening line (14) comprises an incision.

9. A ring lock according to any one of the preceding claims, wherein the said weakening line (14) comprises a perforation and/or a cut.

10. A ring lock according to any one of the preceding claims, provided with two said weakening lines (14) which extend at least partly between said end parts (11, 12) and a remaining part of the first housing part (2A).

11. A ring lock according to any one of the preceding claims, wherein said end parts (11) are each of tubular design, and substantially surround the locking bolt guiding space (13) at least at said free ends (5, 6).

12. A ring lock according to any one of the preceding claims, wherein said weakening line (14) is designed and localized such that an attempt at forcing applied to the lock may lead to a portion of the first housing part (2A) tearing open via this weakening line, without an end part (11, 12) of this housing part (2A) adjacent the weakening line being carried along.

13. A ring lock according to any one of the preceding claims, wherein an outside contour of the first housing part (2A) is provided with said weakening line.

14. A ring lock according to any one of the preceding claims, wherein the locking bolt (8), through rotation about a virtual axis (R), is slideable from said guiding space (13) into said locking space (7), the said virtual rotation axis (R) extending substantially at right angles relative to a front side (F) or rear side, respectively, of the lock housing, the locking bolt (8) being connected to an operating means (9) which extends through the arcuate slot (10) of the lock housing (2), wherein the arcuate slot (10) is provided in the front side (F) or rear side of the lock housing (2).

15. A ring lock according to claim 14, wherein said two curved parts have approximately a similar length and extend from both sides of a middle part (20A, 20B) of the lock housing (2).

16. A ring lock according to any one of the preceding claims, wherein the legs (3, 4) of the lock, after being mounted on a bicycle, extend on both sides of a wheel of the bicycle.

17. A bicycle, provided with a ring lock according to any one of the preceding claims.

## Patentansprüche

1. Ringschloss für ein Fahrrad, versehen mit einem Gehäuse (2) mit zwei kurvenförmigen Abschnitten (3, 4), welche einen Schlossführungsraum (13) umgeben, wobei freie Enden (5, 6) der Abschnitte (3, 4) einem Schließraum (7) gegenüberliegen, wobei das Schloss (1) mit einem betriebsfähigen Schließbolzen (9) versehen ist, welcher von dem Führungsraum (13) in den Schließraum (7) verschiebbar ist, wobei das Schlossgehäuse einen ersten (2A) und einen zweiten Gehäuseteil (2B) umfasst, wobei die Gehäuseteile (2A, 2B) miteinander verbunden sind, wobei das erste Gehäuseteil (2A) mit zwei verstärkten Endteilen (11) versehen ist, welche an den freien Enden (5, 6) angeordnet sind, wobei das Gehäuse (2) einen bogenförmigen Schlitz (10) umfasst, **dadurch gekennzeichnet, dass** das erste Gehäuseteil (2A) mit mindestens einer Schwächungslinie (14) versehen ist, wobei sich die Schwächungslinie (14) mindestens teilweise zwischen und/oder neben dem Endteil (11) und einem verbleibenden Teil des ersten Gehäuseteils (2A) erstreckt.

2. Ringschloss gemäß Anspruch 1, wobei sich die Schwächungslinie (14) mindestens gegenüber einer äußeren Kante (16) des zweiten Gehäuseteils erstreckt, wobei die äußere Kante (16) insbesondere eine gekrümmte Kante des zweiten Gehäuseteils (2B) ist und wobei die äußere Kante (16) sich insbesondere entlang einer Außenseite des ersten Gehäuseteils (2A) erstreckt.

3. Ringschloss gemäß Anspruch 1 oder 2, wobei sich die Schwächungslinie (14) im Wesentlichen rechtwinklig zu einer Kante des ersten Gehäuseteils (2A) erstreckt.

4. Ringschloss gemäß einem der vorangegangenen Ansprüche, wobei das erste Gehäuseteil (2A) mit dem bogenförmigen Schlitz (10) versehen ist, um außen ein Betätigungsmittel für einen Schließbolzen zu führen, während sich mindestens eine Schwächungslinie im Wesentlichen über einen bestimmten Abstand in Richtung eines Endes des bogenförmigen Schlitzes (10) erstreckt.

5. Ringschloss gemäß einem der vorangegangenen Ansprüche, wobei sich mindestens eine Schwächungslinie im Wesentlichen parallel zu einer Umfangsrichtung des Endteils (11) erstreckt.

6. Ringschloss gemäß einem der vorangegangenen Ansprüche, wobei jede Schwächungslinie im Wesentlichen parallel zu einer fiktiven Rotationsachse (R) ist, wobei der Schließbolzen während der Verwendung um die Rotationsachse (R) rotierbar ist.

7. Ringschloss gemäß einem der vorangegangenen Ansprüche, wobei der Schließbolzen (8) mit einem Betätigungsmittel (9) verbunden ist, welches durch den bogenförmigen Schlitz (10) des Schlossgehäuses (2) vorsteht, während sich jede Schwächungslinie (14) bis zu einem Abstand von dem bogenförmigen Schlitz (10) erstreckt.

8. Ringschloss gemäß einem der vorangegangenen Ansprüche, wobei die Schwächungslinie (14) einen Einschnitt umfasst.

9. Ringschloss gemäß einem der vorangegangenen Ansprüche, wobei die Schwächungslinie (14) eine Perforierung und/oder einen Schnitt umfassen.

10. Ringschloss gemäß einem der vorangegangenen Ansprüche, versehen mit zwei Schwächungslinien (14), welche sich mindestens teilweise zwischen den Endteilen (11, 12) und einem verbleibenden Teil des ersten Gehäuseteils (2A) erstrecken.

11. Ringschloss gemäß einem der vorangegangenen Ansprüche, wobei die Endteile (11) jeweils einen rohrförmigem Aufbau aufweisen und den Führungsraum (13) für den Schließbolzen mindestens an den freien Enden (5, 6) im Wesentlichen umgeben.

12. Ringschloss gemäß einem der vorangegangenen Ansprüche, wobei die Schwächungslinie (14) derart ausgebildet und angeordnet ist, dass ein Aufbrechversuch, der auf das Schloss angewendet wird, dazu führen kann, einen Teil des ersten Gehäuseteils (2A) entlang dieser Schwächungslinie aufzureißen, ohne ein Endteil (11, 12) dieses Gehäuseteils (2A) neben der Schwächungslinie mitzureißen.

13. Ringschloss gemäß einem der vorangegangenen Ansprüche, wobei eine äußere Kontur des ersten Gehäuseteils (2A) mit der Schwächungslinie versehen ist.

14. Ringschloss gemäß einem der vorangegangenen Ansprüche, wobei der Schließbolzen (8) durch Rotation um eine fiktive Achse (R) vom Führungsraum (13) in den Schließraum (7) verschiebbar ist, wobei sich die fiktive Rotationsachse (R) im Wesentlichen rechtwinklig relativ jeweils zu einer Vorderseite (F) bzw. Rückseite des Schlossgehäuses erstreckt, wobei der Schließbolzen (8) mit einem Betätigungsmittel (9) verbunden ist, welches sich durch den bogenförmigen Schlitz (10) des Schlossgehäuses (2) erstreckt, wobei der bogenförmige Schlitz (10) in der Vorderseite (F) oder der Rückseite des Schlossgehäuses (2) vorgesehen ist.

15. Ringschloss gemäß Anspruch 14, wobei zwei kurvenförmige Teile ungefähr eine ähnliche Länge aufweisen und sich von beiden Seiten eines Mittelteils (20A, 20B) des Schlossgehäuses (2) erstrecken.

16. Ringschloss gemäß einem der vorangegangenen Ansprüche, wobei sich die Abschnitte (3, 4) des Schlosses, nachdem sie an einem Fahrrad befestigt wurden, auf beiden Seiten eines Rads des Fahrrads erstrecken.

17. Fahrrad, versehen mit einem Ringschloss gemäß einem der vorangegangenen Ansprüche.

## Revendications

1. Cadenas en anneau pour une bicyclette, pourvu d'un logement (2) avec deux jambes courbes (3,4) qui entourent un espace de guidage de cadenas (13), dans lequel des extrémités libres (5, 6) des jambes (3,4) font face à une espace de verrouillage (7), le cadenas (1) étant pourvu d'un boulon de verrouillage actionnable (9) qui a une faculté de glissement à partir dudit espace de guidage (13) dans ledit espace de verrouillage (7), alors que ledit logement de cadenas comprend des première (2A) et deuxième (2B) parties de logement, lesquelles parties de logement (2A, 2B) sont reliées l'une à l'autre, la première partie de logement (2A) étant pourvue de deux parties d'extrémité renforcées (11) qui sont situées au niveau desdites extrémités libres (5, 6), dans lequel le logement (2) comprend une fente arquée (10), **caractérisé en ce que** la première partie de logement (2A) est pourvue d'au moins une ligne d'affaiblissement (14), la ligne d'affaiblissement (14) s'étendant au moins en partie entre et/ou de façon adjacente à une dite partie d'extrémité (11) et une partie restante de la première partie de logement (2A).

2. Cadenas en anneau selon la revendication 1, dans lequel la ligne d'affaiblissement (14) s'étend au moins en opposition à un bord extérieur (16) de la seconde partie de logement, lequel bord extérieur (16) est, en particulier, un bord courbe de la seconde partie de logement (2B) et lequel bord extérieur (16) s'étend en particulier le long d'un extérieur de la première partie de logement (2A).

3. Cadenas en anneau selon la revendication 1 ou 2, dans lequel ladite ligne d'affaiblissement (14) s'étend sensiblement à angle droit par rapport à un bord de la première partie de logement (2A).

4. Cadenas en anneau selon l'une quelconque des revendications précédentes, dans lequel la première partie de logement (2A) est pourvue de la fente arquée (10) pour mener un moyen d'actionnement de boulon de verrouillage à l'extérieur, alors qu'au moins une dite ligne d'affaiblissement s'étend sensiblement sur une distance particulière dans la direction d'une extrémité de ladite fente arquée (10).

5. Cadenas en anneau selon l'une quelconque des revendications précédentes, dans lequel au moins une dite ligne d'affaiblissement s'étend sensiblement en parallèle à une direction circonférentielle d'une dite partie d'extrémité (11).

6. Cadenas en anneau selon l'une quelconque des revendications précédentes, dans lequel chaque dite ligne d'affaiblissement est sensiblement parallèle à un axe de rotation virtuel (R), axe de rotation (R) autour duquel ledit boulon de verrouillage a une faculté de rotation pendant l'utilisation.

7. Cadenas en anneau selon l'une quelconque des revendications précédentes, dans lequel le boulon de verrouillage (8) est relié à un moyen d'actionnement (9) qui fait saillie à travers la fente arquée (10) du logement de cadenas (2), tandis que chaque dite ligne d'affaiblissement (14) s'étend à une certaine distance de ladite fente arquée (10).

8. Cadenas en anneau selon l'une quelconque des revendications précédentes, dans lequel ladite ligne d'affaiblissement (14) comprend une incision.

9. Cadenas en anneau selon l'une quelconque des revendications précédentes, dans lequel ladite ligne d'affaiblissement (17) comprend une perforation et/ou une coupure.

10. Cadenas en anneau selon l'une quelconque des revendications précédentes, pourvu de deux dites lignes d'affaiblissement (14) qui s'étendent au moins en partie entre les parties d'extrémité (11, 12) et une partie restante de la première partie de logement (2A) .

11. Cadenas en anneau selon l'une quelconque des revendications précédentes, dans lequel lesdites parties d'extrémité (11) sont chacune de conception tubulaire, et entourent sensiblement l'espace de guidage (13) du boulon de verrouillage au moins au niveau desdites extrémités libres (5, 6).

12. Cadenas en anneau selon l'une quelconque des revendications précédentes, dans lequel ladite ligne d'affaiblissement (14) est conçue et localisée de telle sorte qu'une tentative d'effraction appliquée sur le cadenas peut faire qu'une portion de la première partie de logement (2) se déchire via cette ligne d'affaiblissement, sans qu'une partie d'extrémité (11, 12) de cette partie de logement (2A) adjacente à la ligne d'affaiblissement ne soit emportée.

13. Cadenas en anneau selon l'une quelconque des revendications précédentes, dans lequel un contour extérieur de la première partie de logement (2A) est pourvu de ladite ligne d'affaiblissement.

14. Cadenas en anneau selon l'une quelconque des revendications précédentes, dans lequel le boulon de verrouillage (8), par rotation autour d'un axe virtuel (R), peut glisser à partir dudit espace de glissement (13) dans ledit espace de verrouillage (7), ledit axe de rotation virtuel (R) s'étendant sensiblement à angle droit par rapport à un côté avant (F) ou un côté arrière, respectivement, du logement de cadenas, le boulon de verrouillage (8) étant relié à un moyen d'actionnement (9) qui s'étend à travers la fente arquée (10) du logement de cadenas (12), dans lequel la fente arquée (10) est disposée dans le côté avant (F) ou le côté arrière du logement de cadenas (2).

15. Cadenas en anneau selon la revendication 14, dans lequel lesdites deux parties courbes sont approximativement de longueurs similaires et s'étendent à partir des deux côtés d'une partie de milieu (20A, 20B) du logement de cadenas (2).

16. Cadenas en anneau selon l'une quelconque des revendications précédentes, dans lequel les jambes (3, 4) du cadenas, après qu'il a été monté sur une bicyclette, s'étendent sur les deux côtés d'une roue du bicyclette.

17. Bicyclette, pourvue d'un cadenas en anneau selon l'une quelconque des revendications précédentes.
